# EUROPEAN PATENT SPECIFICATION

(11) **EP 1 979 287 B1**
(45) Date of publication and mention of the grant of the patent: **29.07.2015**
(21) Application number: 07700415.8
(22) Date of filing: 05.01.2007
(51) Int. Cl.: C03C 17/36

(54) **HEAT TREATABLE COATED GLASS PANE**
WÄRMEBEHANDELBARE BESCHICHTETE GLASSCHEIBE
VITRE REVÊTUE PAR TRAITEMENT THERMIQUE

(30) Priority: 11.01.2006 GB 0600425
(43) Date of publication of application: 15.10.2008
(73) Proprietor: Pilkington Group Limited, St. Helens Merseyside WA10 3TT (GB)
(72) Inventor: SIDDLE, John, Merseyside PR9 0HW (GB); RIDEALGH, John, Cheshire CW9 6PP (GB); UNQUERA, Javier, Greater Manchester M15 4NY (GB)
(74) Representative: Pettet, Nicholas Edward
(86) International application number: PCT/GB2007/050008
(87) International publication number: WO 2007/080428

(56) References cited:
- EP-B1- 1 154 963
- WO-A2-2006/067102
- US-A1- 2004 086 723
- US-A1- 2005 208 281
- US-B1- 6 355 334

## Description

The invention relates to heat treatable coated glass panes with a low-e and/or solar control coating and to coated glass panes having undergone a heat treatment.

Heat treated glass panes which are toughened to impart safety properties and/or are bent are required for a large number of areas of application, for example for architectural or motor vehicle glazings. It is known that for thermally toughening and/or bending glass panes it is necessary to process the glass panes by a heat treatment at temperatures near or above the softening point of the glass used and then either to toughen them by rapid cooling or to bend them with the aid of bending means. The relevant temperature range for standard float glass of the soda lime silica type is typically about 580 - 690 °C, the glass panes being kept in this temperature range for several minutes before initiating the actual toughening and/or bending process.

"Heat treatment", "heat treated" and "heat treatable" in the following description and in the claims refer to thermal bending and/or toughening processes such as mentioned before and to other thermal processes during which a coated glass pane reaches temperatures in the range of about 580 - 690 °C for a period of several minutes, e.g. for up to about 10 minutes. A coated glass pane is deemed to be heat treatable if it survives a heat treatment without significant damage, usual damages caused by heat treatments being high haze values or spots.

Difficulties can arise if glass panes are to be provided with coatings, particularly with coatings comprising at least one silver-based functional layer, e.g. to impart low-e and/or solar control properties to reduce the energy transfer through the coated glass pane in certain spectral regions. Such coatings are not of themselves heat treatable. Silver-based functional layers are usually embedded between lower and upper anti-reflection layers and, optionally, further auxiliary layers which protect them, modify the reflection and transmission characteristics of the coating, etc.

It would be preferable if coatings able to withstand heat treatments without significant damage (= heat treatable coatings) could be made available. It would be even more preferable if heat treatable coatings able to withstand heat treatments without a significant change of their optical properties, e.g. light transmittance and reflection colour, as reflected in low ΔE* values, could be made available.

EP 0 718 250 B1 discloses heat treatable coated glass panes with a low-e and/or solar control coating comprising a lower anti-reflection layer, a silver-based functional layer, a barrier layer and an outer anti-reflection layer, wherein the lower and upper anti-reflection layers each comprise partial layers having diffusion barrier properties and wherein the top partial layer of the lower anti-reflection layer comprises an oxide of Zn. While AlN is mentioned as a material for both partial layers having diffusion barrier properties, silicon compounds such as silicon nitride (Si₃N₄) or silicon oxinitride (SiOₓN_{y}) are disclosed as most preferred materials for these partial layers. The upper anti-reflection layer may comprise further partial layers of metal oxides such as an oxide of Zn. The metallic barrier layer protects the silver-based functional layer during the deposition of the preceding layers of the coating and during a subsequent heat treatment by capturing oxygen and thereby being partially or fully oxidized. According to the examples of the prior publication coated glass panes with coatings, the anti-reflection layers of which comprise partial layers of Si₃N₄ or SiO₂ as diffusion barriers, show only small changes of their light transmittance (ΔT_{L} at most 2 %) and their reflection colour when heat treated at temperatures between 620 and 640 °C. Known coated glass panes provide however of a less than optimum sheet resistance at a given thickness of the silver-based functional layer. Their production, specifically when using metallic barrier layers, is difficult to control and certain of the known coated glass panes show an unacceptably high damage level or an unacceptably low mechanical robustness after a heat treatment.

EP 1 154 963 B1 discloses heat treatable coated glass panes with a low-e and/or solar control coating comprising a lower anti-reflection layer, a silver-based functional layer, a barrier layer and an outer anti-reflection layer, wherein the lower and/or upper anti-reflection layers comprise partial layers of (oxi)nitrides of aluminium and of metal oxides, preferably of mixed oxides of Zn and A1. Barrier layers are provided on the silver-based functional layers which may be either metallic or suboxidic. The coatings are designed such that the light transmittance of a coated glass pane changes by at least 2.5 % and preferably significantly more during a heat treatment. EP 1 154 963 B1 does not disclose heat treatable coated glass panes having stable optical properties, specifically a stable light transmittance, during a heat treatment.

EP 1 140 721 B1 discloses a method of sputtering barrier layers of metal-doped metal oxides such as Al-doped ZnO from metal-doped metal oxide targets, which barrier layers are to be arranged on top of the silver-based functional layer of certain low-e and/or solar control coatings. The lower anti-reflection layer of these coatings may comprise a base layer of an oxide of Zn and Sn and a top layer of ZnO, and the upper anti-reflection layer may comprise a core layer of an oxide of Zn and Sn. At least some of the coated glass panes disclosed in EP 1 140 721 B1 are said to be heat treatable and to show only small changes of their optical properties during a heat treatment. However it has been found that coatings of the type disclosed in this prior publication tend to be highly susceptible to visible haze formation during a heat treatment.

The inventors of the instant invention found that several of the known heat treatable coated glass panes did not withstand without visible damage one or the other test simulating ordinary environmental influences during storage, transport and use of the coated glass panes before and after a heat treatment and the mechanical and chemical conditions acting on the coated glass panes during usual handling and processing steps. Many of the known heat treatable coated glass panes showed significant and clearly noticeable modifications of their optical properties during a heat treatment.

The invention primarily aims to provide heat treatable coated glass panes. In a preferred embodiment the invention aims to provide heat treatable coated glass panes, the optical properties of which do not change significantly due to a heat treatment. Preferably the colour modification caused by a heat treatment should be so small that heat treated and non-heat treated coated glass panes may be glazed adjacent to each other without a noticeable colour difference.

The inventive heat treatable low-e and/or solar control coatings should withstand ordinary environmental influences during storage, transport and use of the coated glass panes both before and after a heat treatment and survive the mechanical and chemical conditions acting on the coated glass panes during usual handling and processing steps without significant damage.

The invention furthermore aims to provide heat treatable coated glass panes which either have a high light transmittance and a low emissivity (corresponding to a low sheet resistance) or which show good solar control properties, i.e. have a low solar energy transmittance combined with a sufficiently high light transmittance.

Another aim is to keep the haze value of the heat treatable coated glass pane low even after a heat treatment.

The solution of one or more of the problems mentioned above is the subject of claim 1. Preferred embodiments are set out in claims 2 - 24.

Heat treated coated glass panes manufactured from coated glass panes according to invention are set out in claims 25 - 27.

Surprisingly heat treatable coated glass panes with low-e and/or solar control coatings comprising at least one silver-based functional layer which in certain embodiments undergo only slight modifications of their optical properties can be provided by carefully selecting the layer sequences of both the lower and upper anti-reflection layers and preferably also of the barrier layer(s) such as claimed.

According to the invention the lower anti-reflection layer of the low-e and/or solar control coating comprises at least three partial layers, namely:
- a base layer of an (oxi)nitride of aluminium on or near the glass pane, serving as a glass side diffusion barrier;
- a middle layer of an oxide of Sn or of a mixture of Zn and Sn, serving to stabilize the coating during a heat treatment by providing a dense and thermally stable layer and to reduce the sheet resistance of the coating by improving the quality of the subsequently deposited silver-based functional layer, as compared to certain other known dielectric layers; and
- a top layer of a metal oxide (such as an oxide of Zn in a preferred embodiment), serving as a growth promoting layer for the silver-based functional layer deposited thereafter.

Surprisingly this at least triple layer lower anti-reflection layer provides a superior quality to the low-e coating as compared to known double layer lower anti-reflection layers such as "AlN / ZnO" or "Zn-Sn oxide / ZnO".

Furthermore according to the invention the at least double layer upper anti-reflection layer comprises a core layer of an oxide of Zn and Sn and a thin outermost protective layer which preferably consists of an (oxi)nitride or an oxide of aluminium. The core layer of an oxide of Zn and Sn, which may make up the major part of the upper anti-reflection layer, provides stability and diffusion barrier properties whereas the purpose of the thin outermost protective layer is to protect the coating effectively against getting hazy during a heat treatment, the inventive at least double layer upper anti-reflection layer as a whole together with the barrier layer located directly on top of the silver-based functional layer protecting effectively the silver-based functional layer during a heat treatment and against usual mechanical and chemical influences during handling, processing and use.

The invention proposes to use an oxide of Zn and Sn both for the middle layer of the lower anti-reflection layer and the core layer of the upper anti-reflection layer of the coating. The middle layer of the lower anti-reflection layer may also be deposited as a layer of an oxide of Sn without a Zn content.

Preferably the middle layer of the lower anti-reflection layer comprises 0 - 90 wt.% Zn and 100 - 10 wt.% Sn, more preferably about 50 wt.% Zn and about 50 wt.% Sn (in wt.% of its total metal contend). In a preferred embodiment the middle layer of the lower anti-reflection layer comprises about 10 - 90 wt.% Zn and 90 -10 wt.% Sn.

The thickness of the middle layer of the lower anti-reflection layer should be at least about 5 nm, an upper thickness limit of about 25 nm being mainly given by optical interference conditions. A typical and preferred thickness range is about 10 - 20 nm.

Preferably the core layer of the upper anti-reflection layer comprises 10 - 90 wt.% Zn and 90 -10 wt.% Sn, more preferably about 50 wt.% Zn and about 50 wt.% Sn (in wt.% of the total metal content). Its thickness is usually somewhat higher than the thickness of the middle layer of the lower anti-reflection layer if no further dielectric layer is used to complete the upper anti-reflection layer. A typical thickness range is in this case about 25 - 45 nm. If further dielectric or other layers are added the thickness of the core layer may be lower.

The lower anti-reflection layer comprises a base layer of an (oxi)nitride of aluminium. The term "(oxi)nitride of aluminium" encompasses both Al nitride (AIN) and Al oxinitride (AlOₓN_{y}). Layers of (oxi)nitride of aluminium may be sputtered from A1 targets in a sputtering atmosphere containing nitrogen and argon. An oxygen content of the aluminium (oxi)nitride layer may result from residual oxygen in the sputtering atmosphere or from a controlled content of added oxygen in the atmosphere. It is generally preferred if the oxygen content of the aluminium (oxi)nitride is significantly lower than its nitrogen content, i.e. if the atomic ratio O/N in the layer is kept significantly below 1. It is most preferred to use A1 nitride with a negligible oxygen content for the base layer of the anti-reflection layer. The oxygen content is regarded as negligible if the refractive index of the layer does not differ significantly from the refractive index of a pure A1 nitride layer.

It is within the scope of the invention to use doped or mixed A1 targets or to otherwise add metals or semiconductors to the A1 component of this layer as long as the essential barrier and protection property of the base layer of the anti-reflection layer is not lost. Such doping may for example result from the use of certain technical A1 alloys as target materials which typically contain metal or semiconductor additives such as Cu, Mg, Ti, Si or the like in amounts of up to about 5 -10 wt.%.

The top layer of the lower anti-reflection layer primarily functions as a growth promoting layer for the subsequently deposited silver-based functional layer. It is preferred if this layer comprises an oxide of Zn, optionally doped with metals like Al or Sn in an amount of up to about 10 wt.%. ZnO has proven very effective as growth promoting layer which assists in achieving a low sheet resistance at a given thickness of the subsequent silver-based functional layer. Alternatively an oxide of In or of an In-based alloy, e.g. In-Sn oxide. (ITO), may be used as top layer of the lower anti-reflection layer. In this case it is preferred if the top layer is reactively deposited from a metallic target.

It is within the scope of the invention to use multiple layers for the top layer of the lower anti-reflection layer, for example to combine the aforementioned ZnO-based growth-promoting layer with a further oxidic layer having a low thickness of at most about 3 nm. The further oxidic layer may preferably be chosen from stoichiometric or substoichiometric ITO, NiCrOₓ or ZrOₓ, stoichiometric or substoichiometric NiCrOₓ being particularly preferred. The oxidic layer shall be essentially stoichiometric if a coating having stable optical properties is aimed at.

The overall thickness of both the lower and upper anti-reflection layers is chosen (as is well known in the art) such that they can serve their basic function of anti-reflecting the silver-based functional layer by optical interference and provide the coated glass pane with a pleasing appearance or a desired colour in reflection or transmission. To achieve the desired anti-reflection property each anti-reflection layer will typically have a total thickness of about 20 - 60 nm.

In these boundaries the thickness of the individual partial layers of the anti-reflection layers can be varied widely. It is however preferred if
- the base layer of the lower anti-reflection layer has a thickness of at least about 8 nm, preferably between about 12 and 30 nm, more preferably between about 12 and 20 nm;
- the middle layer of the lower anti-reflection layer has a thickness of at least about 5 nm, preferably between about 5 and 25 nm; and
- the top layer of the lower anti-reflection layer has a thickness of at least about 2 nm, preferably between about 3 and 10 nm.

The silver-based functional layer will usually consist only of silver without any additive, as is normally the case in the area of low-e and/or solar control coatings. It is, however, within the scope of the invention to modify the properties of the silver-based functional layer by adding doping agents, alloy additives or the like or even very thin metal or metal compound layers, as long as the properties of the silver-based functional layer necessary for its function as a highly light-transmitting and low light-absorbent IR-reflective layer are not substantially impaired thereby.

The thickness of the silver-based functional layer is dominated by its technical purpose. For typical low-e and/or solar control purposes its preferred thickness is about 8 - 15 nm and specifically about 10-12 nm. With such a layer thickness light transmittance values of above 85 % and a normal emissivity below 0.05 after a heat treatment can be easily achieved.

The barrier layer of the inventive coating may generally comprise metals like, e.g., Ti, NiCr or suboxides like, e.g., TiOₓ, NiCrOₓ, InSnOₓ, NiCrOₓ being particularly preferred. Such materials are well known in the art to be able to protect a silver layer during the deposition of a subsequent anti-reflection layer and during a heat treatment of the coated glass pane.

If however the coated glass pane shall not only be heat treatable but is intended to undergo only a negligible colour and light transmittance modification during a heat treatment, barrier layers comprising essentially fully oxidized, at most slightly substoichiometric metal oxides are preferred. The use of a metal oxide barrier layer rather than a metallic or suboxidic barrier layer leads to an extremely high optical stability of the coating during a heat treatment and effectively assists in keeping optical modifications during a heat treatment small. Surprisingly the good barrier and protective properties of the upper and lower anti-reflection layers according to the invention allows to avoid the use of known oxygen scavenger materials like metals or metal suboxides. While these oxygen scavenger materials usually protect the silver-based functional layer effectively against damage, their oxidization will lead to a significant increase of the light transmittance and a clearly visible colour modification of the coated glass pane during a heat treatment.

It has been found that a superior protection of the silver-based functional layer during the deposition process and a high optical stability during a heat treatment can be achieved if the barrier layer comprises a (doped) metal oxide sputtered from a (doped) metal oxide target.

Good results are specifically achieved if the barrier layer comprises an Al-doped oxide of Zn (ZnO:Al), specifically if sputtered from a conductive ZnO:Al target. ZnO:Al may be deposited fully oxidized or such that it is slightly suboxidic. Surprisingly it has been found that a very low oxygen deficit in the ZnO:Al layer is well-suited, which is so low that it does not lead to a noticeable light absorption effect by the barrier layer even for the non-heat treated coated glass pane, e.g. reduces the light transmittance of the coated glass pane via absorption by no more than about 1 %. The use of such a low light-absorbing barrier layer advantageously leads only to a slight light transmittance increase during a heat treatment.

The barrier layer may also comprise an oxide of titanium, preferably an oxide of titanium sputtered from a conductive oxide target. Again the oxide may be deposited slightly substoichiometric.

Another alternative is the use of indium oxide or an oxide of an indium-based alloy like In-Sn oxide (ITO), also optionally deposited slightly substoichiometric, the In or In-based alloy oxides also preferably being sputtered from oxide targets.

The adherence of an oxidic barrier layer to the silver-based functional layer may be increased if the layer has a graded composition, the barrier layer being preferably more metallic near the silver-based functional layer than at its outer surface.

In a preferred embodiment of the invention a multiple layer barrier layer is provided which comprises in combination a suboxidic metal oxide barrier layer of, e.g., NiCrOₓ immediately above the silver-based functional layer and a subsequent (metal doped) metal oxide barrier layer such as, e.g., Al-doped ZnO.

The targets of an Al-doped oxide of Zn, of titanium oxide and of In oxide or of an In-based alloy oxide mentioned before are preferably at least slightly suboxidic to increase their electrical conductivity and to simplify the deposition process for the - optionally slightly suboxidic - Al-doped zinc oxide (ZnOₓ:Al), titanium oxide or In or In-based alloy oxide barrier layers. While sputtering in a coating atmosphere containing a controlled small amount of added oxygen may be appropriate, it is preferred if the coating atmosphere contains only a minimum of oxygen. An extremely low oxygen content of the coating atmosphere may be achieved by pre-sputtering the targets to provide clean and well-defined target surfaces before starting the actual deposition process, by pumping for a sufficiently long period to evacuate the sputter chamber to a very low pressure of residual gases and specifically by depositing the layers in a sputtering atmosphere to which only inert gases such as argon have been added.

To provide a sufficient protection for the silver-based functional layer a barrier layer if deposited as a metal oxide should have a thickness of at least about 2 nm. While the upper thickness limit is less critical it is preferred to use a barrier layer with a thickness of less than about 15 nm. If metal or metal suboxide barrier layers are used even a lower thickness than about 3 nm may be sufficient, e.g. a thickness of at least about 0.5 nm and preferably of about 1 - 3 nm.

The outermost protective layer of the coating and of the outer anti-reflection layer consists of a different material as the Zn-Sn oxide core layer of the outer anti-reflection layer. The material of the outermost protective layer shall be chosen such that good diffusion barrier and mechanical protection properties during handling, processing and a heat treatment are achieved. To optimise the mechanical robustness of the coating the thickness of the outermost protective layer should be low. A thickness of about 1 - 5 nm has been found sufficient to achieve low haze values, while still maintaining good mechanical robustness.

As for the base layer an (oxi)nitride of Al proved to be a very efficient diffusion barrier and protective material for the outermost protective layer, even in such a low thickness. The explanations and considerations given above in relation to an Al (oxi)nitride base layer are applicable also to an Al (oxi)nitride outermost protective layer. However in the case of the outermost protective layer a higher oxygen content than for the base layer may still lead to acceptable protective and barrier properties.

Among suitable transparent materials for the outermost protective layer are specifically oxides of Al, Si, Ti and/or Zr and (oxi)nitrides of Si, further materials known for their protective and barrier properties not being excluded. If a high optical stability of the coating during a heat treatment is not a key issue visible light absorbing materials such as an (oxi) nitride of Ti may also be used.

Coated glass panes with a low-e and/or solar control coating according to the invention - if properly, designed - may achieve a light transmittance T_{L} of at least about 85 %, but even higher values are achievable. The light transmittance after a heat treatment will mostly be somewhat higher than the light transmittance before such heat treatment. Therefore heat treated coated glass panes according to the invention may achieve a light transmittance T_{L} of at least about 86 %. Coated glass panes produced in accordance with certain embodiments of the invention, e.g. if metallic or suboxidic layers are avoided, typically show an increase ΔT_{L} of their light transmittance during a heat treatment of at most about 3%.

Light transmittance values referred to in the description and in the claims are specified with reference to a coated glass pane comprising a 4 mm thick standard float glass pane having a light transmittance T_{L} of 89 % without a coating.

Coated glass panes according to the invention preferably have a normal emissivity of at most about 0.07, more preferred of at most about 0.05 (before a heat treatment). Due to a heat treatment the emissivity of the inventive coatings is usually reduced by typically about 0.01 or even 0.02, without such reduction having a significant influence on the visual appearance of the coated glass panes. Heat treated coated glass panes preferably have a normal emissivity of at most about 0.05, preferably at most about 0.04. A reduction of the emissivity during a heat treatment reflects a reduction of the correlated sheet resistance of the coating which indicates that the silver-based functional layer survives the heat treatment without major damage. Indeed it is usually found that a heat treatment increases the free electron mobility in silver-based functional layers if they are efficiently protected against heat-caused damage.

While a neutral reflection and transmission colour of the coated glass panes is usually aimed at, the colour of the coated glass panes according to the invention may be varied widely according to the intended appearance of the product.

Coated glass panes according to the invention may be used as such if no heat treatment is required. One major advantage of coated glass panes according to certain embodiments of the invention consists in the fact that due to their thermal stability non-heat treated and heat treated coated glass panes may be used in the same building and glazed adjacent to each other without a noticeable colour difference.

The colour and light transmittance stability of the inventive coated glass panes is reflected by the fact that heat treated coated glass pane according to certain preferred embodiments of the invention display a ΔE* value (with reference to an identical non-heated coated glass pane and as defined herein below) below about 2.5 in reflection (glass side) and below about 1.5 in transmission. Specifically the colour stability of certain embodiments of the invention is extremely high, Δa* and Δb* each remaining below about ±1 in transmission which is practically non-noticeable.

The thermal stability of coated glass panes according to the invention is reflected in that the haze value of heat treated coated glass panes remains below about 0.5 %, most often even below about 0.3 %. Larger increases in the haze value if detected during a heat treatment would indicate that the coating is beginning to be damaged.

It goes without saying that coated glass panes will not necessarily survive without damage more than one heat treatment and that all comparison values before and after heat treatment refer to a comparison between a non-heat treated coated glass pane and a coated glass pane heat treated once. Needless to say that heat treated coated glass panes may need to survive subsequent thermal treatments at significantly lower temperatures such as those applied during heat soak tests (usually applied to artificially age and thereby destroy NiS-containing toughened glass panes) which are typically in the order of 300 °C.

To minimize the light absorption in the coating and to reduce the light transmittance increase during a heat treatment the upper and lower anti-reflection layers should be deposited with an essentially stoichiometric composition. If however the optical stability or a high light transmittance is not of particular concern a certain degree of substoichiometry may be acceptable for one or more of the layers of the inventive coating.

If an optimized optical performance, i.e. high light transmittance and low IR transmittance at neutral colours, is aimed at it is proposed to provide an additional dielectric layer as partial layer of the lower anti-reflection layer. The best effect is achieved if such additional layer is arranged between the base layer of the lower anti-reflection layer and the glass pane. The material of the additional dielectric layer should have a high refractive index, preferably a refractive index at 550 nm of at least about 2.2, an index of at least 2.3 being more preferred. A suitable material for such additional dielectric layer is an oxide of titanium (TiO₂). It is particularly preferred to use a medium-frequency-sputtered oxide of titanium for such additional dielectric layer and it is preferred to deposit the titanium oxide layer in a sputtering atmosphere to which no nitrogen is added. Other suitable materials are, e.g., the oxides of Nb, Zr, Hf and/or Bi.

To further optimize the optical properties of the coating the upper and/or lower anti-reflection layers layer may comprise further partial layers consisting of suitable materials generally known for dielectric layers of low-e and/or solar control coatings, in particular chosen from one or more of the oxides of Sn, Ti, Zn, Nb, Ce, Hf, Ta, Zr, Al and/or Si and/or of (oxi)nitrides of Si and/or Al. It is particularly within the scope of the invention to combine the Al (oxi)nitride base layer of the lower anti-reflection layer with a Si (oxi)nitride layer. It will be appreciated that these further partial layers may contain additives which modify their properties and/or facilitate their manufacture, e.g. doping agents or reaction products of reactive sputtering gases. In the case of oxide layers nitrogen may be added to the sputtering atmosphere leading to the formation of oxinitrides rather than oxides.

In particular cases, specifically if a particularly low solar energy transmittance is aimed at, it may be desirable for one or both of the anti-reflection layers or the barrier layer(s) to comprise one or more thermally stable light and/or solar energy absorbing layer(s). To protect such visible light absorbing layer against undesired oxidization during a heat treatment it is preferred if the light and/or solar energy absorbing layer is embedded in the base layer of the lower anti-reflection layer which for such purpose is split into (at least) two partial layers of an (oxi)nitride of Al. Here advantage is taken of the fact that an (oxi)nitride of Al provides of good oxygen diffusion barrier properties which leads to an effective protection of the embedded oxidizable layer by the embedding partial layers of the Al (oxi)nitride base layer of the lower anti-reflection layer.

Care must be taken by performing a proper material, structure and thickness selection when adding any partial layer to the basic layer sequence of the inventive coatings that the properties primarily aimed at, e.g. a high thermal stability, are not significantly impaired.

While the invention is primarily directed to low-e and/or solar control coatings with only one silver-based functional layer it is within the scope of the invention to use two or more sequences of layers comprising a lower anti-reflection layer, a silver-based functional layer, a barrier layer and an upper anti-reflection layer, the upper anti-reflection layer of one series of layers and the lower anti-reflection layer of a subsequent series possibly being combined to function as a Fabry-Perot separation layer between subsequent silver-based functional layers. By providing more than one sequence of layers the optical properties of the low-e and/or solar control coating may be further optimized for the respective application as is well known in the art. In these cases preferably each anti-reflection layer comprises a core or middle layer of an oxide of Zn and Sn. A lowermost base layer of an (oxi)nitride of aluminium needs to be provided near the glass pane and a thin outermost protective layer of the coating preferably comprising an (oxi)nitride of aluminium or any other of the materials mentioned before for such layer shall be provided. Below each silver-based functional layer a growth promoting top layer such as explained herein before shall be arranged. Above each silver-based a barrier layer such as described herein before shall be arranged.

The invention is not limited to a specific production process for the coating. However, it is particularly preferred if at least one of the layers and most preferred all layers are applied by magnetron cathode sputtering, either in the DC mode, in the medium frequency mode or in any other suitable mode, whereby metallic or semiconducting targets are sputtered reactively or non-reactively in a suitable sputtering atmosphere. Depending on the materials to be sputtered planar or rotating targets may be used.

The coating process should preferably be carried out by setting up suitable coating conditions such that any oxygen deficit of any oxidic layer of the coating is kept low to achieve the targeted high stability of the light transmittance and colour of the coated glass panes during a heat treatment.

The process parameters for the manufacture of inventive heat treatable coated glass panes and the thicknesses and materials of the individual layers are chosen such that - at least in those embodiments featuring a particularly high optical stability - during a subsequent heat treatment the surface resistance of the coating decreases and the light transmittance of the coated glass pane does not change by more than about 3 %. In any case the deposition shall be performed such that the haze value of the coated glass pane does not exceed about 0.5 %, preferably remains below about 0.3 %, even after a heat treatment.

Particularly high quality coatings can be achieved if at least one of the partial layers of the lower anti-reflection layer is medium-frequency sputtered from metal or metal oxide targets. Medium-frequency sputtering is well known in the art of sputter deposition and encompasses AC sputtering of two or more targets at a frequency in the range of about 5 - 200 kHz.

The invention is further explained in the following with the aid of examples.

For all examples the coatings were deposited on 4 mm thick standard float glass panes with a light transmittance of about 89 % using conventional AC and/or DC magnetron sputtering devices, medium-frequency sputtering being applied where appropriate.

All dielectric layers of an oxide of Zn and Sn (ZnSnOₓ, weight ratio Zn : Sn ≈ 50 : 50) were reactively sputtered from zinc-tin targets in an Ar/O₂ sputter atmosphere.

The growth promoting top layers of the lower anti-reflection layers of ZnO or ZnO:Al were sputtered from Zn or Al-doped Zn targets in an Ar/O₂ sputter atmosphere.

The functional layer which in all examples consisted of pure silver (Ag) was sputtered from silver targets in an Ar sputter atmosphere without any added oxygen and at a partial pressure of residual oxygen below 10⁻⁵ mbar.

The barrier layers of (slightly substoichiometric, low light absorbing) Al-doped zinc oxide (ZnO:Al) were sputtered from conductive ZnOₓ:Al targets in a pure Ar sputter atmosphere without added oxygen. In the case of a TiOₓ barrier layer the deposition process would have been controlled such that the oxygen content of the layer increased from the silver layer outwards.

The base layer of aluminium nitride (AlNₓ) and the outermost protective layer of aluminium nitride (AlNₓ) of the examples 1 - 3 were reactively sputtered from an Al target in an Ar/N₂ sputter atmosphere containing only residual oxygen.

The base layer of silicon nitride (SiNₓ) and the core layer of the upper anti-reflection layer of silicon nitride (SiNₓ) of the comparative example 4 were reactively sputtered from an Al-doped Si target in an Ar/N₂ sputter atmosphere containing only residual oxygen.

The coatings of examples 1 - 3 (example 4 being a comparative example not featuring the invention) had the layer sequences as shown in Table 1 (thicknesses in nm):

**Table 1**

| | **base layer of lower AR layer** | **middle layer of lower AR layer** | **top layer of lower AR layer** | **functional layer** | **barrier layer** | **core layer of upper AR layer** | **outermost protective layer of upper AR layer** |
|---|---|---|---|---|---|---|---|
| Ex. 1 | AlNₓ 17 | ZnSnOₓ 12 | ZnO 5 | Ag 10.5 | ZnO:Al 4.5 | ZnSnOₓ 37 | AlNₓ 2 |
| Ex. 2 | AlNₓ 17 | SnOₓ 12 | ZnO:Al 5 | Ag 11.5 | ZnO:Al 5 | ZnSnOₓ 35 | AlN_{X} 2 |
| Ex. 3 | AlNₓ 17 | ZnSnOₓ 12 | ZnO:Al 5 | Ag 11.5 | ZnO:Al 5 | ZnSnOₓ 35 | AlNₓ 2 |
| CEx.4 | SiNₓ 15 | ZnSnOₓ 15 | ZnO 5 | Ag 12 | ZnO:Al 5 | SiNₓ 30 | ZnSnOₓ 5 |

Immediately after the deposition of the coatings of examples 1 - 4 the optical and some other properties of the coated glass panes were measured (values "before HT"). The samples were then heat treated at about 650 °C for about 5 minutes. Thereafter the properties referred to above were measured again (values "after HT"). The results are listed in Tables 2 and 3:

**Table 2**

| | **Haze before HT [%]** | **Haze after HT [%]** | **Sheet resistance R_{□} before HT** | **Sheet resistance R_{□} after HT** | **ΔR_{□}** | **T_{L} before HT** | **T_{L} after HT** | **ΔT_{L}** |
|---|---|---|---|---|---|---|---|---|
| | | | **[Ω/sq.]** | **[Ω/sq.]** | **[Ω/sq.]** | **[%]** | **[%]** | **[%]** |
| Ex. 1 | 0.10 | **0.08** | 5.8 | 4.1 | **-1.7** | 86.1 | 87.7 | **1.6** |
| Ex. 2 | 0.05 | **0.08** | 5.3 | 3.6 | **-1.7** | 85.8 | 88.9 | **3.1** |
| Ex. 3 | 0.05 | **0.05** | 5.2 | 3.4 | **-1.8** | 85.5 | 88.5 | **3.0** |
| CEx. 4 | 0.09 | **0.11** | 6.1 | 3.4 | **-2.7** | 86.8 | 88.6 | **1.8** |

The values stated for the light transmittance T_{L} of the coated glass panes in the examples 1 - 4 were derived from measurements according to EN 140. The sheet resistance was measured using a NAGY SRM-12 non-contact sheet resistance meter.

The haze values designate the percentage of transmitted light which in passing through the coated glass pane deviates from the incident beam direction by forward scattering (measured in accordance with ASTM D 1003-61). A haze value which remains low during a heat treatment is a good indicator for heat treatability.

All coatings of the examples 1 - 4 performed well in terms of haze (which remained low, even if slightly higher for the comparative example 4), sheet resistance decrease (down to values around 3 - 4 Ω/sq. corresponding to normal emissivities of about 0.04 and light transmittance increase (no more than about 3 %).

**Table 3**

| | **Transm. colour before HT (a* / b*)** | **Transm. colour after HT (a* / b*)** | **ΔE* Trans** | **Refl. colour film side before HT (a* /b*)** | **Refl. colour film side after HT (a*/b*)** | **ΔE* Refl. film side** | **Refl. colour glass side before HT (a* / b*)** | **Refl. colour glass side after HT (a*/b*)** | **ΔE* Refl. glass side** |
|---|---|---|---|---|---|---|---|---|---|
| Ex. 1 | -2.42 / 3.36 | -2.21 / 3.36 | **0.69** | -1.25 / -15.04 | -0.08/-15.14 | **1.17** | -1.28 / -14.08 | 0.02 /-15.31 | **1.76** |
| Ex. 2 | -2.25/3.3 | -1.91 / 1.99 | **1.81** | -1.02 / -10.28 | -0.84/-10.22 | **2.01** | -1.08 / -9.52 | -0.4 / -10.92 | **1.86** |
| Ex. 3 | - | -1.8 / 2.54 | **-** | - | -1.39 /-12.22 | - | - | -0.97 / -12.57 | - |
| CEx. 4 | -2.58 / 1.43 | -2.37/1.56 | **0.79** | 3.15/-8.96 | 3.76/-9.38 | **0**.**95** | - | - | - |

The colour characteristics were measured and reported using the well established CIE LAB L*, a*, b* coordinates (see e.g. [0030] and [0031] in WO 2004-063 111 A1). ΔE* = ((Δa*)² + (Δb*)² + (ΔL*)²)^{1/2}, wherein ΔL*, Δa* and Δb* are the differences of the colour values L*, a*, b* of the coated glass pane each before and after a heat treatment. ΔE* values of less than 3 represent a low and practically non-noticeable colour modification caused by the heat treatment.

All coatings of the examples 1-4 performed well in terms of ΔE* (no more than about 2 in reflection and transmission).

In addition to the quantitative properties given in the tables above the visual appearance of the coated samples before and after the heat treatment was evaluated using an internal evaluation system on a perfectness scale of 0 (perfect, no faults) to 3 (high number of clearly visible faults). The internal evaluation system considers both the microscopic light scattering effect of the coating (haze, see Table 2) and the more macroscopic effect of visible faults in the coating which cause local colour variations where the coating is damaged or imperfect. All examples showed a reasonably low number of faults (perfectness value 0 - 1) before the heat treatment.

The inventive coatings of examples 1 - 3 showed no substantially increased amount of faults after the heat treatment. The coating of comparative example 4 which used SiNₓ layers rather than AlN_{X} layers were however visibly damaged by the appearance of a non-negligible number of visible large spots (perfectness value 3) after the heat treatment and its red haze value ("red haze" relates to a scattering effect which gets visible if a coating is illuminated with bright light before a dark background, simulating the scattering effect that takes place in the coating at sunrise or sunset) was high making these coatings unacceptable for commercial purposes.

The coated glass panes of examples 1 - 3 not only proved to be heat treatable but also survived a number of tests simulating ordinary environmental influences during storage, transport and use of the coated glass panes both before and after a heat treatment. The tests comprised specifically a Taber test, a humidity test, an HCl test and an oil rub test.

A Taber test provides a measure of the relative scratch resistance of coated glass panes. The test consists in placing the coated glass samples on a Taber abrader and to subject them to 10 revolutions with a standard 500 g weight. Then by microscopy, image and data analysis the average area of the non-abraded coating is determined. The harder the coating is the more of the coating remains on the glass.

A humidity test is an accelerated test that is carried out in a cabinet simulating the environmental influences the coating is expected to experience during its lifetime. The purpose of this test is to determine the relative durability of the coating when subjected to high temperature and high humidity conditions. The test involves visual analysis (monitor the development of characteristic corrosion spots) of the coated glass panes before and after a period of 30 hours in the test cabinet held at 70 °C and 75 % relative humidity.

The purpose of an HCl test is to assess the chemical durability of the coatings. The coated glass panes are submerged in a 0.01M solution of hydrochloric acid at 40 °C for five minutes. The sheet resistance of the coating before and after submerging the sample is determined. The HCl test is regarded as passed if the change in sheet resistance is below 5%.

An oil rub test serves to simulate the influence of cutting oils used for cutting glass panes on the mechanical robustness of a coating. Coated glass panes which do not withstand an oil rub test before or after a heat treatment will be difficult to process and are unsuitable for most practical applications. The coated samples are rubbed using a felt pad with an area of 1.5 cm² soaked in microscope oil. The samples are subjected to 500 cycles with a 15 N load at a speed of 37 cycles per minute. Oil rubbed samples are evaluated using an internal evaluation system on a perfectness scale of 0 (perfect, no damage) to 3 (silver layer completely removed). A score of 1 or less is considered acceptable.

Needless to say that the invention is not restricted to the exact layer sequences of the examples 1 - 3.

It is particularly within the scope of the invention to add further layers to the basic layer sequences used in the examples such as described herein before.

It is furthermore within the scope of the invention to modify the materials used for the individual layers by doping with or adding metals or the like as long as the primary task of providing heat treatable coatings is not impaired thereby.

It will be appreciated that any thickness values given for the layers of the coating are not to be understood as exact values but due to the thinness of the layers to be presented with an uncertainty of typically about 10 %, not less than about 0.5 nm.

Finally more complex coatings using more than one silver-based functional layer may be easily derived from the principal teaching disclosed above.

## Claims

1. Coated glass pane with a low-e and/or solar control coating comprising - in sequence from the glass surface - at least the following layers:
- a lower anti-reflection layer comprising a base layer of an (oxi)nitride of aluminium and a metal oxide top layer,
- a silver-based functional layer,
- a barrier layer,
- an upper anti-renection layer comprising a core layer of a metal oxide and an outermost protective layer,
**characterized in that**
- the lower anti-reflection layer further comprises a middle layer of an oxide of Sn or of a mixture of Zn and Sn between its base layer and its top layer,
- the core layer of the upper anti-reflection layer comprises an oxide of Zn and Sn, and
- the outermost protective layer has a thickness of 1 - 5 nm.

2. Coated glass pane according to claim 1, **characterized in that** the middle layer of the lower anti-reflection layer has a thickness of at least 5 nm, preferably between 5 and 25 nm.

3. Coated glass pane according to claim 1 or 2, **characterized in that** the middle layer of the lower anti-reflection layer comprises 0 - 90 wt.% Zn and 100 - 10 wt.% Sn, preferably about 50 wt.% Zn and about 50 wt.% Sn (in wt.% of its total metal content).

4. Coated glass pane according to any of the foregoing claims, **characterized in that** the core layer of the upper anti-reflection layer comprises 10 - 90 wt.% Zn and 90 - 10 wt.% Sn, preferably about 50 wt.% Zn and about 50 wt.% Sn (in wt.% of the total metal content).

5. Coated glass pane according to any of the foregoing claims, **characterized in that** the base layer of the lower anti-reflection layer has a thickness of at least 8 nm, preferably between 12 and 30 nm.

6. Coated glass pane according to any of the foregoing claims, **characterized in that** the top layer of the lower anti-reflection layer has a thickness of at least 2 nm, preferably between 3 and 10 nm.

7. Coated glass pane according to any of the foregoing claims, **characterized in that** the top layer of the lower anti-reflection layer comprises an oxide of Zn, optionally doped with metals such as Al or Sn.

8. Coated glass pane according to any of the foregoing claims, **characterized in that** the top layer of the lower anti-reflection layer comprises an oxide of indium or of an indium-based alloy such as ITO, preferably reactively sputtered from a metallic target.

9. Coated glass pane according to any of the foregoing claims, **characterized in that** the top layer of the lower anti-reflection layer comprises stoichiometric or substoichiometric NiCrOₓ.

10. Coated glass pane according to any of the foregoing claims, **characterized in that** the barrier layer comprises a metal oxide, preferably a metal oxide sputtered from an oxidic target.

11. Coated glass pane according to claim 10, **characterized in that** the barrier layer comprises one or more of a metal-doped oxide of Zn, preferably an Al-doped oxide of Zn, an oxide of Ti, an oxide of In or of an In-based alloy, preferably of Sn-doped In oxide (ITO) .

12. Coated glass pane according to claim 10 or 11, **characterized in that** the barrier layer comprising a metal oxide has a thickness of at least 2 nm.

13. Coated glass pane according to any of the foregoing claims, **characterized in that** the barrier layer comprises a metal or a metal suboxide, preferably of Ti, NiCr or TiOₓ, NiCrOₓ, InSnOₓ.

14. Coated glass pane according to claim 13, **characterized in that** the barrier layer comprising a metal or a metal suboxide has a thickness of at least 0.5 nm, preferably between 1 and 3 nm.

15. Coated glass pane according to any of the foregoing claims, **characterized in that** the outermost protective layer of the upper anti-reflection layer comprises one or more of an (oxi)nitride of Al, an oxide of Al, Si, Ti or Zr, an (oxi)nitride of Si.

16. Coated glass pane according to any of the foregoing claims, **characterized in that** the outermost protective layer of the upper anti-reflection layer comprises an (oxi)nitride of Ti.

17. Coated glass pane according to any of the foregoing claims, **characterized in that** the lower anti-reflection layer comprises at least one additional dielectric layer below its top layer, preferably between its base layer and the glass pane.

18. Coated glass pane according to claim 17, **characterized in that** the additional dielectric layer has a refractive index at 550 nm of at least 2.2.

19. Coated glass pane according to claim 18, **characterized in that** the additional dielectric layer is chosen from one or more of the oxides of Ti, Nb, Zr, Hf or Bi.

20. Coated glass pane according to any of the foregoing claims, **characterized in that** the coating comprises an additional light and/or solar energy absorbing layer.

21. Coated glass pane according to claim 20, **characterized in that** the light and/or solar energy absorbing layer comprises a metal or a metal nitride, preferably chosen from NiCr, W or a nitride of W.

22. Coated glass pane according to claim 20 or 21, **characterized in that** the light and/or solar energy absorbing layer is embedded in the base layer which is split into two partial layers of an (oxi)nitride of aluminium.

23. Coated glass pane according to claim 1, characterized will that the coating comprises the following layer sequence:
(glass pane /) base layer of AlN 5 - 30 nm / middle layer of ZnSnOₓ 5 - 25 nm / top layer of ZnO 2 - 10 nm / opt. further partial top layer of NiCrOₓ ≤ 3 nm / functional layer of Ag 8 - 15 nm / opt. suboxidic barrier layer of NiCrOₓ 0.5-3 nm / metal oxide barrier layer of ZnO: Al 2 - 10 nm / core layer of ZnSnOₓ 10 - 40 mn / outer protective layer of AlN 2 - 5 nm.

24. Coated glass pane according to any of the foregoing claims, **characterized in that** it has a normal emissivity of at most 0.07, preferably at most 0.05.

25. Heat treated coated glass pane according to any of claims 1 to 24, **characterized in that** it has a normal emissivity of at most 0.05, preferably at most 0.04.

26. Heat treated coated glass pane according to any of claims 1 to 24, **characterized in that** its ΔE* value is below 2.5 in reflection and below 1.5 in transmission.

27. Heat treated coated glass pane according to any of claims 1 to 24, **characterized in that** its haze value is below 0.5 %, preferably at most 0.3 %.

## Patentansprüche

1. Beschichtete Glasscheibe mit einer Beschichtung mit geringem Emissionsgrad und/oder Sonnenschutzeigenschaften, die - der Reihe nach ab der Glasoberfläche - mindestens die folgenden Schichten umfasst:
- eine untere Antireflexionsschicht, die eine Basisschicht aus einem Aluminium(oxi)nitrid und eine Metalloxid-Deckschicht umfasst,
- eine Funktionsschicht auf Silberbasis,
- eine Barriereschicht,
- eine obere Antireflexionsschicht, die eine Kernschicht aus einem Metalloxid und eine äußerste Schutzschicht umfasst,
**dadurch gekennzeichnet, dass**
- die untere Antireflexionsschicht weiterhin eine mittlere Schicht aus einem Oxid von Sn oder einem Gemisch von Zn und Sn zwischen ihrer Basisschicht und ihrer Deckschicht umfasst;
- die Kernschicht der oberen Antireflexionsschicht ein Oxid von Zn und Sn umfasst, und
- die äußerste Schutzschicht eine Dicke von 1 - 5 nm aufweist.

2. Beschichtete Glasscheibe nach Anspruch 1, **dadurch gekennzeichnet, dass** die mittlere Schicht der unteren Antireflexionsschicht eine Dicke von mindestens 5 nm, vorzugsweise im Bereich von 5 bis 25 nm, aufweist.

3. Beschichtete Glasscheibe nach Anspruch 1 oder 2, **dadurch gekennzeichnet, dass** die mittlere Schicht der unteren Antireflexionsschicht 0 - 90 Gew.-% Zn und 100 - 10 Gew.-% Sn, vorzugsweise etwa 50 Gew.-% Zn und etwa 50 Gew.-% Sn, (in Gew.-%, bezogen auf den Gesamtmetallgehalt) umfasst.

4. Beschichtete Glasscheibe nach einem der vorhergehenden Ansprüche, **dadurch gekennzeichnet, dass** die Kernschicht der oberen Antireflexionsschicht 10 - 90 Gew.-% Zn und 90 - 10 Gew.-% Sn, vorzugsweise etwa 50 Gew.-% Zn und etwa 50 Gew.-% Sn, (in Gew.-%, bezogen auf den Gesamtmetallgehalt) umfasst.

5. Beschichtete Glasscheibe nach einem der vorhergehenden Ansprüche, **dadurch gekennzeichnet, dass** die Basisschicht der unteren Antireflexionsschicht eine Dicke von mindestens 8 nm, vorzugsweise im Bereich von 12 bis 30 nm, aufweist.

6. Beschichtete Glasscheibe nach einem der vorhergehenden Ansprüche, **dadurch gekennzeichnet, dass** die Deckschicht der unteren Antireflexionsschicht eine Dicke von mindestens 2 nm, vorzugsweise im Bereich von 3 bis 10 nm, aufweist.

7. Beschichtete Glasscheibe nach einem der vorhergehenden Ansprüche, **dadurch gekennzeichnet, dass** die Deckschicht der unteren Antireflexionsschicht ein Oxid von Zn umfasst, das gegebenenfalls mit Metallen wie Al oder Sn dotiert ist.

8. Beschichtete Glasscheibe nach einem der vorhergehenden Ansprüche, **dadurch gekennzeichnet, dass** die Deckschicht der unteren Antireflexionsschicht ein Oxid von Indium oder einer Legierung auf Indiumbasis, wie ITO, umfasst, das vorzugsweise von einem metallischen Target gesputtert wird.

9. Beschichtete Glasscheibe nach einem der vorhergehenden Ansprüche, **dadurch gekennzeichnet, dass** die Deckschicht der unteren Antireflexionsschicht stöchiometrisches oder nichtstöchiometrisches NiCrOₓ umfasst.

10. Beschichtete Glasscheibe nach einem der vorhergehenden Ansprüche, **dadurch gekennzeichnet, dass** die Barriereschicht ein Metalloxid, vorzugsweise ein Metalloxid, das von einem oxidischen Target gesputtert wird, umfasst.

11. Beschichtete Glasscheibe nach Anspruch 10, **dadurch gekennzeichnet, dass** die Barriereschicht ein oder mehrere von einem metalldotierten Oxid von Zn, vorzugsweise ein Al-dotiertes Oxid von Zn, einem Oxid von Ti, einem Oxid von In oder einer Legierung auf In-Basis, vorzugsweise ein Sn-dotiertes In-Oxid (ITO), umfasst.

12. Beschichtete Glasscheibe nach Anspruch 10 oder 11, **dadurch gekennzeichnet, dass** die Barriereschicht ein Metalloxid umfasst, das eine Dicke von mindestens 2 nm aufweist.

13. Beschichtete Glasscheibe nach einem der vorhergehenden Ansprüche, **dadurch gekennzeichnet, dass** die Barriereschicht ein Metall oder ein Metallsuboxid, vorzugsweise von Ti, NiCr oder TiOₓ, NiCrOₓ, InSnOₓ, umfasst.

14. Beschichtete Glasscheibe nach Anspruch 13, **dadurch gekennzeichnet, dass** die Barriereschicht, die ein Metall oder ein Metallsuboxid umfasst, eine Dicke von mindestens 0,5 nm, vorzugsweise im Bereich von 1 bis 3 nm, umfasst.

15. Beschichtete Glasscheibe nach einem der vorhergehenden Ansprüche, **dadurch gekennzeichnet, dass** die äußerste Schutzschicht der oberen Antireflexionsschicht ein oder mehrere von einem (Oxi)nitrid von Al, einem Oxid von Al, Si, Ti oder Zr, einem (Oxi)nitrid von Si umfasst.

16. Beschichtete Glasscheibe nach einem der vorhergehenden Ansprüche, **dadurch gekennzeichnet, dass** die äußerste Schutzschicht der oberen Antireflexionsschicht ein (Oxi)nitrid von Ti umfasst.

17. Beschichtete Glasscheibe nach einem der vorhergehenden Ansprüche, **dadurch gekennzeichnet, dass** die untere Antireflexionsschicht mindestens eine zusätzliche dielektrische Schicht unter ihrer Deckschicht, vorzugsweise zwischen ihrer Basisschicht und der Glasscheibe, umfasst.

18. Beschichtete Glasscheibe nach Anspruch 17, **dadurch gekennzeichnet, dass** die zusätzliche dielektrische Schicht einen Brechungsindex bei 550 nm von mindestens 2,2 aufweist.

19. Beschichtete Glasscheibe nach Anspruch 18, **dadurch gekennzeichnet, dass** die zusätzliche dielektrische Schicht unter einem oder mehreren der Oxide von Ti, Nb, Zr, Hf oder Bi ausgewählt wird.

20. Beschichtete Glasscheibe nach einem der vorhergehenden Ansprüche, **dadurch gekennzeichnet, dass** die Beschichtung eine zusätzliche licht- und/oder sonnenenergieabsorbierende Schicht umfasst.

21. Beschichtete Glasscheibe nach Anspruch 20, **dadurch gekennzeichnet, dass** die licht- und/oder sonnenenergieabsorbierende Schicht ein Metall oder ein Metallnitrid, vorzugsweise ausgewählt unter NiCr, W oder einem Nitrid von W, umfasst.

22. Beschichtete Glasscheibe nach Anspruch 20 oder 21, **dadurch gekennzeichnet, dass** die licht- und/oder sonnenenergieabsorbierende Schicht in die Basisschicht eingebettet ist, die in zwei Teilschichten aus einem (Oxi)nitrid von Aluminium aufgespalten wird.

23. Beschichtete Glasscheibe nach Anspruch 1, **dadurch gekennzeichnet, dass** die Beschichtung die folgende Schichtabfolge umfasst:
(Glasscheibe/) Basisschicht von AlN 5 - 30 nm / mittlere Schicht von ZnSnOₓ 5 - 25 nm / Deckschicht von ZnO 2 - 10 nm /gegebenenfalls weiterhin partielle Deckschicht von NiCrOₓ ≤ 3 nm / Funktionsschicht von Ag 8 - 15 nm / ggfs. suboxidische Barriereschicht von NiCrOₓ 0, 5 - 3 nm / Metalloxidbarriereschicht von ZnO:Al 2 - 10 nm /Kernschicht von ZnSnOₓ 10 - 40 nm / äußere Schutzschicht von AlN 2 - 5 nm.

24. Beschichtete Glasscheibe nach einem der vorhergehenden Ansprüche, **dadurch gekennzeichnet, dass** sie einen normalen Emissionsgrad von höchstens 0,07, vorzugsweise höchstens 0,05, aufweist.

25. Wärmebehandelte beschichtete Glasscheibe nach einem der Ansprüche 1 bis 24, **dadurch gekennzeichnet, dass** sie einen normalen Emissionsgrad von höchstens 0,05, vorzugsweise höchstens 0,04, aufweist.

26. Wärmebehandelte beschichtete Glasscheibe nach einem der Ansprüche 1 bis 24, **dadurch gekennzeichnet, dass** ihr ΔE*-Wert unter 2,5 in Reflexion und unter 1,5 in Transmission liegt.

27. Wärmebehandelte beschichtete Glasscheibe nach einem der Ansprüche 1 bis 24, **dadurch gekennzeichnet, dass** ihr Trübungswert unter 0,5 %, vorzugsweise bei höchstens 0,3 %, liegt.

## Revendications

1. Vitre revêtue avec un revêtement à faible émissivité et/ou solaire comprenant, dans l'ordre en partant de la surface du verre, au moins les couches suivantes :
- une couche antireflet inférieure comprenant une couche de base d'un (oxy)nitrure d'aluminium et une couche supérieure d'oxyde métallique ;
- une couche fonctionnelle à base d'argent,
- une couche barrière,
- une couche antireflet supérieure comprenant une couche centrale d'un oxyde métallique et une couche de protection externe,
**caractérisée en ce que**
- la couche antireflet inférieure comprend en outre une couche médiane d'un oxyde de Sn ou d'un mélange de Zn et de Sn entre sa couche de base et sa couche supérieure,
- la couche centrale de la couche antireflet supérieure comprend un oxyde de Zn et de Sn, et
- la couche de protection externe a une épaisseur de 1 à 5 nm.

2. Vitre revêtue selon la revendication 1, **caractérisée en ce que** la couche médiane de la couche antireflet inférieure a une épaisseur d'au moins 5 nm, de préférence entre 5 et 25 nm.

3. Vitre revêtue selon la revendication 1 ou 2, **caractérisée en ce que** la couche médiane de la couche antireflet inférieure comprend de 0 à 90 % en poids de Zn et de 100 à 10 % en poids de Sn, de préférence environ 50 % en poids de Zn et environ 50 % en poids de Sn (en pourcentage en poids de sa teneur totale en métal).

4. Vitre revêtue selon l'une quelconque des revendications précédentes, **caractérisée en ce que** la couche centrale de la couche antireflet supérieure comprend de 10 à 90 % en poids de Zn et de 90 à 10 % en poids de Sn, de préférence environ 50 % en poids de Zn et environ 50 % en poids de Sn (en pourcentage en poids de la teneur totale en métal).

5. Vitre revêtue selon l'une quelconque des revendications précédentes, **caractérisée en ce que** la couche de base de la couche antireflet inférieure a une épaisseur d'au moins 8 nm, de préférence entre 12 et 30 nm.

6. Vitre revêtue selon l'une quelconque des revendications précédentes, **caractérisée en ce que** la couche supérieure de la couche antireflet inférieure a une épaisseur d'au moins 2 nm, de préférence entre 3 et 10 nm.

7. Vitre revêtue selon l'une quelconque des revendications précédentes, **caractérisée en ce que** la couche supérieure de la couche antireflet inférieure comprend un oxyde de Zn, optionnellement dopé avec des métaux tels que Al ou Sn.

8. Vitre revêtue selon l'une quelconque des revendications précédentes, **caractérisée en ce que** la couche supérieure de la couche antireflet inférieure comprend un oxyde d'indium ou d'un alliage à base d'indium tel que ITO, de préférence appliqué par pulvérisation réactive à partir d'une cible métallique.

9. Vitre revêtue selon l'une quelconque des revendications précédentes, **caractérisée en ce que** la couche supérieure de la couche antireflet inférieure comprend un NiCrOₓ stoechiométrique ou substoechiométrique.

10. Vitre revêtue selon l'une quelconque des revendications précédentes, **caractérisée en ce que** la couche barrière comprend un oxyde métallique, de préférence un oxyde métallique pulvérisé à partir d'une cible oxydique.

11. Vitre revêtue selon la revendication 10, **caractérisée en ce que** la couche barrière comprend un ou plusieurs oxydes parmi un oxyde de Zn dopé à un métal, de préférence un oxyde de Zn dopé à Al, un oxyde de Ti, un oxyde de In ou d'un alliage à base de In, de préférence un oxyde de In dopé à Sn (ITO).

12. Vitre revêtue selon la revendication 10 ou 11, **caractérisée en ce que** la couche barrière comprenant un oxyde métallique a une épaisseur d'au moins 2 nm.

13. Vitre revêtue selon l'une quelconque des revendications précédentes, **caractérisée en ce que** la couche barrière comprend un métal ou un suboxyde de métal, de préférence de Ti, de NiCr ou de TiOₓ, de NiCrOₓ ou de InSnOₓ.

14. Vitre revêtue selon la revendication 13, **caractérisée en ce que** la couche barrière comprenant un métal ou un suboxyde métallique a une épaisseur d'au moins 0,5 nm, de préférence entre 1 et 3 nm.

15. Vitre revêtue selon l'une quelconque des revendications précédentes, **caractérisée en ce que** la couche de protection externe de la couche antireflet supérieure comprend un ou plusieurs éléments parmi un (oxy)nitrure de Al, un oxyde de Al, Si, Ti ou Zr et un (oxy)nitrure de Si.

16. Vitre revêtue selon l'une quelconque des revendications précédentes, **caractérisée en ce que** la couche de protection externe de la couche antireflet supérieure comprend un (oxy)nitrure de Ti.

17. Vitre revêtue selon l'une quelconque des revendications précédentes, **caractérisée en ce que** la couche antireflet inférieure comprend au moins une couche diélectrique supplémentaire sous sa couche supérieure, de préférence entre sa couche de base et la vitre.

18. Vitre revêtue selon la revendication 17, **caractérisée en ce que** la couche diélectrique supplémentaire a un indice de réfraction à 550 nm d'au moins 2,2.

19. Vitre revêtue selon la revendication 18, **caractérisée en ce que** la couche diélectrique supplémentaire est choisie parmi un ou plusieurs des oxydes de Ti, Nb, Zr, Hf ou Bi.

20. Vitre revêtue selon l'une quelconque des revendications précédentes, **caractérisée en ce que** le revêtement comprend une couche supplémentaire absorbant la lumière et/ou l'énergie solaire.

21. Vitre revêtue selon la revendication 20, **caractérisée en ce que** la couche absorbant la lumière et/ou l'énergie solaire comprend un métal ou un nitrure de métal, choisi de préférence parmi NiCr, W ou un nitrure de W.

22. Vitre revêtue selon la revendication 20 ou 21, **caractérisée en ce que** la couche absorbant la lumière et/ou l'énergie solaire est noyée dans la couche de base qui est séparée en deux couches partielles d'un (oxy)nitrure d'aluminium.

23. Vitre revêtue selon la revendication 1, **caractérisée en ce que** le revêtement comprend la série de couches suivante :
(vitre /) couche de base de AIN de 5 à 30 nm / couche médiane de ZnSnOₓ de 5 à 25 nm / couche supérieure de ZnO de 2 à 10 nm / éventuellement une autre couche supérieure partielle de NiCrOₓ ≤ 3 nm / couche fonctionnelle de Ag de 8 à 15 nm / éventuellement une couche barrière suboxydique de NiCrOₓ de 0,5 à 3 nm / couche barrière d'oxyde métallique de ZnO:Al de 2 à 10 nm / couche centrale de ZnSnOₓ de 10 à 40 nm / couche de protection externe de AIN de 2 à 5 nm.

24. Vitre revêtue selon l'une quelconque des revendications précédentes, **caractérisée en ce qu'**elle présente une émissivité normale inférieure ou égale à 0,07, de préférence inférieure ou égale à 0,05.

25. Vitre revêtue traitée thermiquement selon l'une quelconque des revendications 1 à 24, **caractérisée en ce qu'**elle présente une émissivité normale inférieure ou égale à 0,05, de préférence inférieure ou égale à 0,04.

26. Vitre revêtue traitée thermiquement selon l'une quelconque des revendications 1 à 24, **caractérisée en ce que** sa valeur de ΔE* est inférieure à 2,5 en réflexion et inférieure à 1,5 en transmission.

27. Vitre revêtue traitée thermiquement selon l'une quelconque des revendications 1 à 24, **caractérisée en ce que** son indice de trouble est inférieur à 0,5 %, de préférence inférieur ou égal à 0,3 %.
